# EUROPEAN PATENT SPECIFICATION

(11) **EP 3 846 515 B1**
(45) Date of publication and mention of the grant of the patent: **24.05.2023**
(21) Application number: 19220007.9
(22) Date of filing: 30.12.2019
(51) Int. Cl.: H04W 8/12, H04W 48/18, H04W 36/00

(54) **DYNAMIC NETWORK ROAMING**
DYNAMISCHES NETZWERKROAMING
ITINÉRANCE DE RÉSEAU DYNAMIQUE

(43) Date of publication of application: 07.07.2021
(73) Proprietor: Deutsche Telekom AG, 53113 Bonn (DE)
(72) Inventor: HEIDER-AVIET, Andreas, 13187 Berlin (DE)
(74) Representative: Vossius & Partner Patentanwälte Rechtsanwälte mbB

(56) References cited:
- US-A1- 2019 373 521
- CLEMENTVALE BALTIC OU: "Proposal to eliminate traditional mobile roaming with the use of blockchain technology;DLT-I-108", ITU-T DRAFT; STUDY PERIOD 2017-2020; FOCUS GROUP FGDLT; SERIES DLT-I-108, INTERNATIONAL TELECOMMUNICATION UNION, GENEVA ; CH , vol. fgdlt 2 October 2018 (2018-10-02), pages 1-7, XP044253847, Retrieved from the Internet: URL:https://extranet.itu.int/sites/itu-t/f ocusgroups/fgdlt/input/DLT-I-108.docx [retrieved on 2018-10-02]
- SOONCHUNHYANG UNIVERSITY ET AL: "Proposal for terms and definitions for DLT;DLT-I-110", ITU-T DRAFT; STUDY PERIOD 2017-2020; FOCUS GROUP FGDLT; SERIES DLT-I-110, INTERNATIONAL TELECOMMUNICATION UNION, GENEVA ; CH , vol. fgdlt 2 October 2018 (2018-10-02), pages 1-16, XP044253849, Retrieved from the Internet: URL:https://extranet.itu.int/sites/itu-t/f ocusgroups/fgdlt/input/DLT-I-110.docx [retrieved on 2018-10-02]

## Description

The invention relates to a method and system for management of a transfer of network service for user equipment in a mobile telecommunication network.

Information related to configuration and management of radio network infrastructure of mobile telecommunication networks is proprietary information for most mobile network operators, MNOs. Furthermore, said information is prone to regular changes in the technical configuration, e.g. due to new or broken parts in the infrastructure, network optimization, and changes in antenna positioning, power, and/or emission. Therefore, said information is currently not shared between MNOs. Therefore the time required for network search, network reselection, and handover can be in the order of minutes, depending on the situation, parameters, and in particular on the radio access technology (RAT).

However, to orchestrate a seamless handover between different MNO networks said information is essential. Such a seamless handover is of particular relevance for a continuous and reliable data connection. Said handover is of particular relevance for autonomous vehicles, trains, and unmanned aerial vehicle, UAVs, when crossing national borders or campus premises, i.e. crossing over from cells operated by different MNOs. Such a crossing with a continuous and reliable data connection, i.e. with uninterrupted connectivity, only works when said information is shared between MNOs.

Furthermore, even though some general aspects of Radio Network Configuration Management systems are specified by standardization bodies, the implementations of said Radio Network Configuration Management systems in networks of different MNOs often differ. They specially differ when the MNOs use different network equipment providers. Therefore, the data required for a seamless handover is usually not available when needed.

Still further, radio networks and thus MNOs are subject to strict regulations which are managed by international regulatory bodies such as the International Telecommunication Union, ITU, and each national regulatory body, such as the Bundesnetzagentur for Germany, and international alignments, e.g. concerning the frequencies and emissions at the border regions, which are often not existing or insufficient for a seamless cross-border handover.

Distributed Ledger Technology, DLT, allows multiple parties to share a common, append-only database. The database grows larger with every new transaction and must be stored in multiple nodes, which preferably reside in different locations. This is often cheaper than paying a trusted intermediary to operate a centralized database, and it is also highly resilient because by design there is no single point of failure.

The main feature of DLT, hereinafter also referred to as blockchain technology or blockchain, is that it is a decentralized system for managing security, trust, and information. This is fundamentally different from most existing solutions where data is kept and managed within a central system, with security built around it, rather than within it. The blockchain technology provides an architecture for so-called "trustless trust". It allows the users to trust the outputs of the system without trusting single actors within the system.

In detail, a distributed ledger, DL, is a chain of validated blocks, each block linking to its predecessor all the way to a genesis block, i.e. a first initial block. The aforementioned term block of the blockchain refers to a data structure containing a grouping of so-called transactions, preferably marked with a timestamp, and having a fingerprint of a respective previous block.

Depending on the used blockchain system a block header is preferably hashed. Additionally or alternatively added transactions are validated before including them in a valid block. Valid blocks are then added to the chain by a mechanism referred to as consensus algorithm. Examples of consensus algorithms are proof of work, proof of stake, and proof of authority, all of which are known to the skilled person. A transaction, in simple terms, is a signed data structure. Transactions are transmitted over the blockchain network before made permanent on the blockchain.

The term DLT also includes graph-like data structures, so called directed acyclic graphs, DAG, or merkle trees. In said data structures, after the genesis block, a tree-like structure is created instead of a single chain. Hereinafter the term blockchain is used to describe any kind of distributed ledger technology and vice versa.

Smart contracts are often used on a blockchain. Smart contracts were first proposed by Nick Szabo in 1994, are a form of computer programs. A smart contract is typically written in a high-level programming language, like Solidity or Viper, and compiled to bytecode. This bytecode can be deployed on the DL, whereby an address is returned at which the smart contract's functions can be called. Execution of a smart contract requires sending a transaction to the contract's address, while specifying which function is to be executed, preferably with additional parameters.

US2019373521A1 relates to a process including: advertising a plurality of values corresponding to computing components to peer nodes of a peer-to-peer network; storing the plurality of values in a tamper-evident, distributed ledger; determining a target data center in the distributed computing environment, wherein the target data center performs computations based on data sent from a mobile computing device, and wherein the target data center executes a peer node of the peer-to-peer network; determining a network path that is linked to the target data center based on a distance to the target data center; and transferring a packet from the target data center, wherein the packet traverses the network path and comprises one or more computation results from the target data center.

In view of the above it is an object to provide an improved method and system for management of a transfer of network service for user equipment in a mobile telecommunication network. The above object is achieved by the subject-matter of the independent claims. The dependent claims relate to further aspects if the invention.

The invention is set out in the appended set of claims. Any references in the following description to embodiments, objects, aspects and/or examples which are not covered by the appended claims are considered as not being part of the present invention.

According to the invention there is provided a method for management of a transfer of network service for a user equipment, UE, from a first to a second mobile telecommunication network cell comprising: a) a step of at least one mobile network operator, MNO, storing transfer-related data of the first and/or the second network cell operated by the MNO in a distributed ledger, DL; and b) a step of the MNO operating the first network cell retrieving said transfer-related data of the second network cell from the DL and providing said transfer-related data to the UE, wherein the UE is connected to the first network cell and/or providing said transfer-related data to hardware of the first network cell that communicates with the UE. The second network cell is neighboring and/or overlapping the first network cell and the UE is to be transferred from the first network cell to the second network cell. The DL is shared between MNOs operating neighboring and/or overlapping network cells.

According to an aspect of the invention the method further comprises c) a step of at least one MNO updating the transfer-related data for at least one network cell operated by the MNO in the DL.

According to an aspect of the invention the transfer-related data comprises at least one of data regarding network cell hardware, network cell software, network systems, network data, network metadata, network Quality of Service data, and network configurations. The transfer-related data preferably comprises at least one of data regarding systems, procedures, interfaces, protocols and functionality as defined in a mobile network standard of the first and/or second network cell. The transfer-related data more preferably comprises at least one of a Physical Cell Identity, PCI, a Cell Global Identity, CGI, a Base Station Identity Code,

BSIC, a frequency, a band indicator, a frequency band, an EARFCN of the downlink carrier frequency, RSRP thresholds, RSRQ thresholds, identifiers of neighboring cells, handover capacity of neighboring cells, blacklisted cells, and Radio Access Technology, RAT, of the respective network cell.

According to an aspect of the invention the transfer-related data relates to data, procedures, regulations, interfaces, and functionality as defined in the Harmonized Calculation Method, HCM, and/or
wherein the transfer-related data is used in one ore more of
a) in tools which implement the HCM agreement,
b) in tools which implement roaming agreements,
c) in the Roaming Agreement Exchange, RAEX, tools provided by the GSMA.

According to an aspect of the invention any one of the storing step, the retrieving step, and the updating step is performed using at least one smart contract of the DL.

According to an aspect of the invention the transfer-related data is hashed and only the hash values are stored in the DL, or wherein the transfer-related data is partly hashed and the hash values and parts of the transfer-related data are stored in the DL.

According to an aspect of the invention the method further comprises d) a step of data verification in the distributed ledger for regulatory control, preferably via a smart contract of the DL; wherein the data verification is performed according to at least one of:
i) a national legal framework for telecommunications;
ii) an international legal framework for telecommunications;
iii) a spectrum management organization;
iv) a HCM agreement;
v) the recommendations, specifications, and/or indication of the GSMA;
vi) the National Table of Frequency Allocation, NTFA; and/or
vii) security systems such as lawful intercept and/or surveillance systems.

According to an aspect of the invention the method further comprises a step of the MNO operating the first network cell notifying the MNO operating the second network cell about the transfer.

According to an aspect of the invention the transfer of service is performed according to one of:
i) a "network handover" according to 3GPP specification,
ii) a "network reselection" according to 3GPP specification,
iii) a "blind handover" according to 3GPP specification, and/or
iv) a "release with redirection" according to 3GPP specification.

According to an aspect of the invention the DL is configured to handle the roaming and/or billing process between the at least two MNO for the UE handover, preferably using a virtual currency native to the DL, a general virtual currency, and/or a fiat currency.

According to an aspect of the invention the transfer of service relates to a service along a chain of cells or base-stations and wherein the transfer-related data comprises all transfer-related data for each of a plurality of single transfers of service along said chain, and wherein said chain corresponds to transportation infrastructure preferably to one of: highways, cross-country roads, railways, flight corridors.

According to an aspect of the invention at least one smart contract of the DL is configured to handle at least one of: MNO agreements, roaming contracts, contracts in relation to the HCM agreement, RAEX tools, tariffs, user data, and UE data.

According the invention there is provided a network node configured for management of a transfer of service for a UE between mobile telecommunication networks cells according to the method of any one of the preceding aspects.

According the invention there is provided a system comprising at least two network nodes according to the preceding aspect.

According the invention there is provided a computer program comprising instructions which, when the program is executed by a first computer, cause the first computer to perform the method of any one of the preceding aspects in communication with at least one second computer.

Embodiments of the invention relate to the use of DLT for a transfer of network service between different MNOs and/or different regulatory frameworks. Based on such a system information about the Radio Network Configuration is made conditionally accessible and its usage is integrated into legacy MNO systems. Optionally the system also allows for regulatory control.

It is a general concept of the invention to use Distributed Ledger Technology to enable a shared, controlled, immutable, and transparent system for the management of transfer of a service for user equipment.

It is a general concept of the invention that the blockchain-system is also configured to share additional data, including signal threshold parameters, policies and historical handover data.

It is a general concept of the invention that the invention is implemented in existing networks and/or network configuration systems which are used for standard and legacy operations in order to implement ANR, NRT and related functionalities. The existing MNO infrastructure may not interact directly with the ledger, but depending on the embodiment rather via additional systems with additional interfaces. This is necessary for adjacent functionalities such as member authentication and authorization, PKI Management, asymmetric cryptography, data-extraction, data-insertion, data-transformation, data-logging, data-monitoring and others such as billing, clearing, regulatory control, and/or fraud management.

It is a general concept of the invention that RAN sharing and RAN data sharing within a multiple MNO infrastructure and/or within a Mobile Virtual Network Operator, also known as Virtual Mobile Network Operator, system is integrated into the blockchain according to the invention.

In an embodiment of the invention, the method and system is build upon existing MNO Blockchains.

In an embodiment of the invention, the system and method or parts thereof are implemented in a cloud and/or virtualized. This facilitates the integration of the systems, since it is not bound to a specific implementation and/or hardware and general restrictions are removed, e.g. vendor lock-ins for legacy systems.

In an embodiment of the invention, the datasets comprise the data directly, in an internally referenced form and/or in an externally referenced form.

In an embodiment of the invention, the datasets are signed, encrypted and/or hashed. Hashing is defined as applying a hash function, which is used to map data of arbitrary size to fixed-size values; the latter is also referred to as hashes and is preferably used as unambiguous data fingerprint.

In an embodiment of the invention, only hashes of the datasets are stored in the DL and the corresponding datasets are stored separately at at least one of the respective MNOs, one or more concerned MNOs, and all MNOs.

In an embodiment of the invention, the hashes stored in the DL and are signed and/or encrypted, preferably using asymmetric cryptography.

In an embodiment of the invention, not all data of all cells is shared between every MNO, it is a preferred implementation to use a graph-like architecture. That is, in an embodiment of the invention one ledger is provided for each national border covered by the networks of the MNOs, or regional ledgers are provided for certain geographical regions with one or more national borders. That is one ledger is, e.g., provided for Southern Germany, North and Western Austria and North and Eastern Switzerland, with at least one MNOs per country, or additional ledgers with different MNO partners.

It is an advantage of the invention that a faster data access and faster synchronization is permitted. It is a further advantage that every MNO has up-to-date information due to the shared database nature, and preferably, depending on the implementation and MNO systems, even in real-time. In contrast, in current systems data is usually treated in several steps and it may take days from export to exchange to import.

It is noted that hereinafter the term "border" may also refer to campus premises, or, in more general terms, to a region of overlap between cells and/or geographical areas operated by different MNOs. The term border may also refer to a service border, i.e. to a geographical area where the service of a first cell degrades and the service of a second cell improves.

### Brief description of the drawings

In the drawings
- Fig. 1: shows an example of overlapping mobile telecommunication networks;
- Fig. 2: shows the transfer of network service according to an embodiment of the invention;
- Fig. 3: shows a flow chart of a method according to an embodiment of the invention; and
- Fig. 4: shows a flow chart of a method according to an embodiment of the invention.

### Detailed description of the drawings

In the following, embodiments of the invention will be described. It is noted that some aspects of every described embodiment may also be found in some other embodiments unless otherwise stated or obvious to the skilled person. However, for increased intelligibility, each aspect will only be described in detail when first mentioned and any repeated description of the same aspect will be omitted.

In some areas, e.g. at country borders, overlapping networks are operated by different MNOs. The overlapping network coverage is necessary in order to enable a continuous coverage. In turn, with reasonable effort, it is technically not possible to limit a mobile network exactly to a geographical area.

The technical alignment between different overlapping MNOs is complex due to, e.g., different national regulations, different roaming agreements, varying 2G/3G/4G/5G technologies and implementations, and a lack of information about frequencies used by cells operated by a different MNO.

In 4G, Automatic Neighbor Relation, ANR, functionality, was introduced, which replaces the Radio Network controller, RNC. In 3G and before, the RNC was responsible for the neighbor cell management, and neighbor management was, and often still is, tedious manual work, in particular concerning cells from other MNOs. Within ANR the cell information gathering is based on the measurements from the User Equipment, UE.

Automatic Neighbor Relation functionality has significant impact on the network performance in terms of capacity, latency and scalability which are the key optimization criteria. According to 3GPP specifications, the purpose of the functionality is to relieve the MNO from the burden of manually managing Neighbor Relations. The ANR function manages the conceptual Neighbor Relation Table, NRT for each cell. Located within ANR, the Neighbor Detection Function finds new neighbors and adds them to the NRT. ANR also contains the Neighbor Removal Function which removes outdated NRs. The ANR function relies on cells broadcasting their identity on a global level.

However, the Neighbor Detection Function and the Neighbor Removal Function are implementation specific and many MNOs have not yet implemented the ANR function. Apart from this, cells from foreign MNOs are mostly ignored due to above mentioned reasons as well as business considerations.

Further current drawbacks are also that the UE can scan only one frequency for a predefined period of time; that network quality parameters are missing in the NRT; and that the NRT/NCL is growing in size, if small cells are included. Therefore, the transfer of network service and especially a blind handover, i.e. without detailed information and synchronization concerning the target cell, is thus subject to delays.

Still further, the network handover according to the 3GPP specification requires inter-MNO interfaces which are not available in current live networks. For example base stations at different sides of a national border have no X2 (4G) / Xn (5G) interface, which, however, are essential for the handover from one cell to an adjacent cell. Some other inter-MNO interfaces, e.g. S9, S10 for 4G, are also not implemented by most MNOs.

Still further, coordination rules must be applied concerning the radio frequency usage in order to avoid problems such as interferences. For example the assigned frequency bands for each MNO must be organized a manner that neighboring cells are not allowed to use the same frequencies. Moreover, some areas may have very different "best serve areas" compared to "collocated sectors" of other RATs and technological layers, e.g. 2G, 3G, 4G, or 5G, which renders inter-RAT neighbor planning even more difficult. Especially at border regions between networks operated by different MNOs and/or national borders it is not always known which RAT is available in the neighboring network, which causes delays in reconnecting to the other mobile network of a different MNO and thus the transfer of network service.

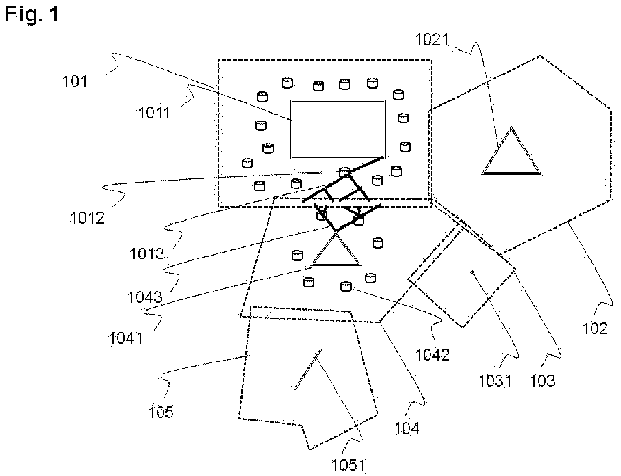

Fig. 1 shows an example of overlapping mobile telecommunication networks. In detail Fig. 1 shows a geographical area covered by different overlapping MNO networks 101, 102, 103, 104, and 105. Each MNO network has a core network, CN, 1011, 1021, 1031, 1041, and 1051. The CNs of different networks are linked to each other via backbone and/or aggregation network connections, which are not shown.

In some embodiments of the invention the borders between different MNO networks correspond to borders of different countries, however, in other embodiments the borders correspond simply to borders of coverage of a MNO network. In other embodiments, MNO networks may also encompass one another, e.g. at a campus premise. At the respective borders, the networks normally have an overlap in order to guarantee coverage of at least one MNO.

In detail the networks 101, 102, 203, 104, and 105 are formed by the Radio Access Network, RAN, and an aggregation network 1013 and 1043 connecting the antennas and base stations of a network with the respective CN. The aggregation network is not shown completely, although being present in MNO networks 102, 103, and 105; it is not shown to improve intelligibility. The networks 101, 102, 103, 104, and 105 further comprise at least one RNC 1012, 1042 in case of pre-4G networks and/or a corresponding functionality as defined by 3GPP in case of 4G and beyond (not shown).

Said RNC device or functionality 1012, 1042 serves a plurality of base stations, i.e. cells, and provides information regarding a transfer of network service for UEs for neighboring cells. The location of the RNC, the number of served cells, and even the content of the information provided by the MNO is implementation specific. As stated before, the ANR functionality of 4G and beyond replaces the RNC, and since it must not ultimately be manifested as a specific physical hardware and/or location, it may be situated at other network locations, or even in the cloud.

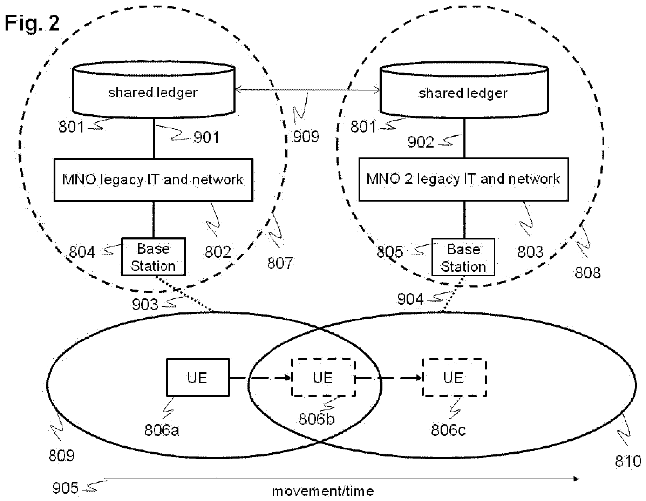

Fig. 2 shows the transfer of network service according to an embodiment of the invention. As indicated by the time scale 905 a UE 806a is first located in a first cell 809 operated by a first MNO 807 and serviced 903 by a base station 804 connected to MNO legacy infrastructure 802. The term MNO legacy infrastructure comprises the entire MNO infrastructure, such as systems, hardware, and software. Then the same UE 806b moves into a region with an overlap between the first and a second cell 810, wherein the second cell 810 is operated by a second MNO 808 and serviced 904 by a base station 805 connected to MNO legacy infrastructure 803. Finally, the still same UE 806c is located in the second cell 810 of the second MNO 808. According to the invention the networks of both MNOs 807 and 808 are connected, via respective connections 901 and 902, to a shared ledger 801 and transfer of network service related information is stored and retrieved from said ledger.

The shared ledger 801, due to its distributed nature, is preferably implemented in form of decentralized nodes at and synchronized 909 between at least both MNOs 807 and 808. In embodiments of the invention nodes of the shared ledger 801 are alternatively or additionally situated at third parties such as the GSMA, clearing organizations and/or regulatory institutions.

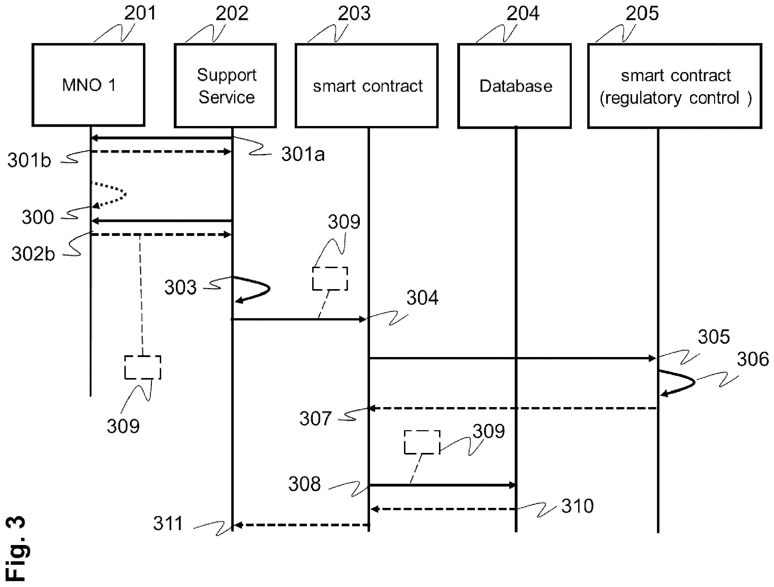

Fig. 3 shows a flow chart of a method according to an embodiment of the invention. In detail, Fig. 3 shows the process of changing and/or updating a dataset of transfer-related data regarding a transfer of network service for UEs between neighboring cells. It is noted that essentially the same steps are used for creating a new dataset and/or invalidating an obsolete dataset.

According to an embodiment of the invention, a support system 202 monitors a first MNO legacy device, system and/or service 201. The device, system and/or service 201 is, preferably an OSS, a BSS, an O&M, a network planning and/or a network configuration tool within a MNO's network or an MNO's infrastructure.

In an embodiment of the invention, said monitoring is based on a regular check 301a. In case no update is reported back 301b to the support system 202, the regular checks are repeated 302a and 302b. In case a change 300 has occurred, in the MNO device or service 201, e.g. due to new cells, a regulation, a Self-Organizing-Network optimization, an UE measurement, or a roaming contract, said change 300 is reported back 302b to the support System 202, preferably including a dataset 309.

According to the invention, the support system 202, upon reception of an update 302b prepares a corresponding transaction 303. Said transaction preparation preferably comprises one or more of the steps of access validation, providing a signature, and providing an encryption. Preferably by use of one or more smart contracts of a DL, more preferably previously agreed on by the involved parties and stored beforehand in the DL.

Said support system 202 preferably stores, manages, and provides information on where which transaction, dataset, and/or smart contracts is stored in DL, comprising search and indexing functionalities, comprising the storage "address" returned 311 afterwards. The addresses are preferably used to identify the transactions and datasets, and to call smart contracts and/or smart contract functions.

According to the invention, the prepared transaction, preferably including the dataset 309, is send 304 from the support system 202 to a smart contract 203 of a DL. Said smart contract 203 is preferably configured for creating, updating, verifying, invalidating, and/or querying data from the DL via smart contract functions and/or via different smart contracts. The ledger which stores the transaction data, i.e. the datasets of transfer-related data, is hereinafter also referred to as database service 204; however the smart contract 203 and the database service 204 are preferably implemented in the same DL. In an embodiment of the invention the database service is realized by the Inter Planetary File System, IPFS.

In a preferred embodiment of the invention, the transaction is sent 305 to a further smart contract 205. Said further smart contract 205 is configured for regulatory control of the data stored in the DL. In an example the further smart contract 205, which is preferably part of the same DL, interacts with systems from government network agencies and/or roaming agreement contracts. Preferably, said interactions are preferably also implemented via respective smart contracts.

In an embodiment of the invention, a data verification step 306 is performed by the further smart contract 205 and a confirmation is reported 307 to the smart contract 203.

It is noted that in some embodiments no data verification is performed. After reception of the confirmation 307 or in case of embodiments without verification, the smart contract 203 sends the transaction 308 to the database service 204, thereby effecting a creation, update and/or invalidation of the dataset 309 of transfer-related data in the DL. The database service 204 sends a response 310 to the smart contract 203 and/or the smart contract sends a response 311 to the support service to inform about the success or failure of the operation, preferably the response comprises additional technical details, more preferably storage addressing information.

In a preferred embodiment of the invention, the dataset 309 comprises information about one or more of a timestamp, geographical position, PCI, CGI, a coverage area, a frequency, network Quality of Service indicators, identifiers of neighboring cells, handover capacity of neighboring cells, a network slice, and billing data of the network cell as well as information, preferably at least an identifier, of neighboring cells.

In preferred embodiments all or part of said information is comprised directly in the dataset or is comprised in form of a reference to data in further systems of the respective MNO. Quality of Service indicators can contain information such as uplink bandwidth, downlink bandwidth, uplink latency, downlink latency, error rates, reference signal received power (RSRP) thresholds, reference signal received quality (RSRQ) thresholds; all of which preferably respective for a given RAT and frequency. Handover capacity comprises information about i.e. X2 / Xn interfaces, EPLMNs, preferred procedures such as a "release with redirection", and/or other data related to the transfer of network service to this cell.

In a preferred embodiment of the invention, the dataset 309 additionally or alternatively comprises information about one or more of the following list: identifiers and/or base station identifiers, TCI, MCC, MNC, LAC, RAC, Cell CI, CID, NCGI, NCI, RNC ID, CID, SAC, SAI, LAI, RAI, RSZI, SPC, ISPC, PLMN ID, MSRN, Mobile Station International Data Number, Location Number, TMGI, MBMS Service Area Identities, Service Announcement FQDN, N3IWF FQDN, NRF, Operator Identifier, Tracking Area Identity, Visited Country FQDN, Network Slice Selection Function FQDN, AMF Set, AMF Instance, Telescopic FQDN, NAI, APN, NAPTR Resource Records, LSA ID, SNA ID, ANDSF-SN, BCC, NCC, BCCH, ARFCN, EARFCN, EARFCN of the downlink carrier frequency, Blacklisted cells, Band indicator, FCCH, SCH, PBCCH, PCH, RACH, AGCH, Cell names, neighboring RNC Index, DL UARFCN, Route Area PLMN, scrambling codes, RAT, creator of the dataset, signaling, timing, access modes/types, maximum and minimum numbers of UEs, priorities and/or preferred partner cells, priorities and/or preferred PLMNs commercial relations, billing/tariff/invoicing, security, fraud-prevention, distinctions between national and foreign cells, and/or regulatory restrictions.

In a preferred embodiment of the invention, the dataset 309 comprises hashes of one or more of the above mentioned information and the corresponding real data is stored separately. The real data is preferably stored at one or more of the respective MNOs, concerned MNOs, and all MNOs.

In an embodiment of the invention, the successful modification of datasets 310 and 311 imply updates to other datasets, especially concerning the neighbor cells. These verifications and potential updates are preferably handled by using the identifier stored in the cells neighbor list and updating the neighbor lists of these neighbor cells. In addition or alternatively the geographical positions are used for verifications and identification of neighboring cells. These implications (not shown in the drawing) are preferably automated and included in smart contracts, i.e. 203, and/or the support service 202.

It is a concept of the invention that the support service 202, the smart contract 203 and the database service 204, and the further smart contract 205 are comprised in an overall DL-system servicing a plurality of MNOs. In this DL-System the core part is at least one distributed ledger, which preferably is a shared, controlled, immutable and transparent, and distributed between the different MNOs. It is also preferred that regulatory institutions and/or independent non-MNOs are forming a part of the DL system.

That is, said support service 202 is preferably a local service at a respective MNO. The support service 202 interacts with the database service 204 via smart contracts 203 and 205. Since the smart contract 203, the database service 204, and the further smart contract 205 are all based on DLT, the data is stored decentralized at each MNO and access to the data is thus possible at any time and without delays via the corresponding smart contract.

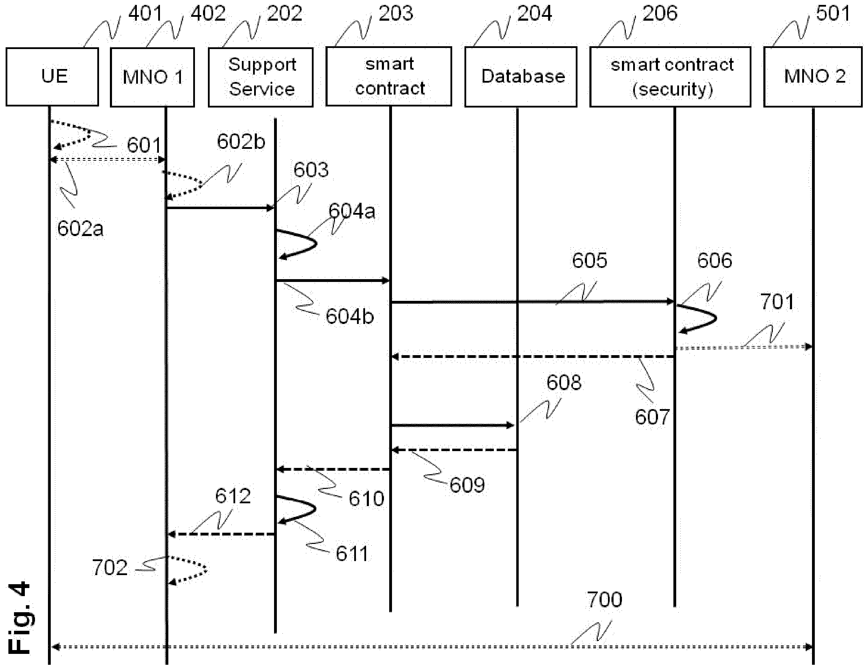

Fig. 4 shows a flow chart of a method according to a second embodiment of the invention. In detail, Fig. 4 shows a transfer of network service of UE 401 between a first MNO and a second MNO, and their respective legacy infrastructure and/or services 402 and 501, cf. also Fig. 2.

In an embodiment of the invention, UE 401 approaches 601 a service border between the network cells of the two MNOs. The term service border refers to a geographical area where the service of a first cell degrades and the service of a second cell improves. Upon the UE 401 approaching the border 601 either the network 402 servicing the UE 401 or the UE 401 itself initiates a service transfer 602a and 602b, preferably as defined in the 3GPP standard, more preferably a 3GPP inter-MNO handover, even more preferably a network reselection and/or release with redirection.

The transfer of network service, also referred to as network handover, itself can be triggered by the UE 401 or the serving network 402. It thus must not always include an inter-frequency search as defined within the 3GPP "network reselection" procedure, but can e.g. also be a "blind handover", i.e. without prior knowledge or measurements of the quality or power level of the alternative target frequency or the alternative technology network, or a "release with redirect" handover, i.e. with knowledge of the transfer related data of the target cell.

Upon reception of the handover initiation 602a and 602b, the MNO legacy device and/or service 402 of the first MNO invokes a query 603 to the support service 202. Depending on how the MNOs network, ANR, and NRT and such are managed, said legacy device or service 402 is preferably performing an O&M system function, a RAN function, a core function and/or a cloud function.

In an embodiment of the invention, the support service 202 is configured to prepare and validate 604a a transaction and to invoke a query 604b about the current cell and neighboring cells, and their potential security implications with respect to the current cell servicing the UE 401 to the smart contract 203.

In an embodiment of the invention, this step 604a and 604a, can imply a search for new neighbor cells, preferably via the identifier of the current cell stored in other cells neighbor lists, and/or geographical positions. This can also imply an update of the current cells neighbor list; both implications are not shown in the drawing.

In a preferred embodiment, the smart contract 203 invokes a check 605 with a second further smart contract 206. Said second further smart contract 206 is preferably configured for interaction 606 with other systems and/or functions, e.g. for fraud protection and/or supervision of UEs, and is preferably part of the same DL.

The second further smart contract 206 returns a confirmation 607 to the smart contract 203 and preferably sends a notification 701 to the second MNO, preferably to a MNO legacy device or service 501 of the second MNO, more preferably an OSS, a BSS, an O&M, and/or billing service of the second MNO. A potential response to 701 and consequences are not shown here, but specific embodiments of the invention may include respective actions such as lawful intercept, altering and/or refusing the transfer of network service. After reception of the confirmation 607 the smart contract 203 is configured to retrieve 608 the dataset with transfer related data for the respective cell servicing the UE 401. The dataset is returned 609 to the smart contract and from the smart contract returned 610 to the support system 202.

It is noted that in some embodiments of the invention no second further smart contract 206 is present. In said embodiments the smart contract 203 is configured to directly retrieve 608 the dataset with transfer related data for the respective cell servicing the UE 401. The dataset is returned 609 to the smart contract and from the smart contract returned 610 to the support system 202.

In some embodiments of the invention, said dataset is encrypted. In the latter case said data is decrypted in a post processing step 611 at the support system 202.

In some embodiments of the invention in which said dataset at least partly comprises hashes, the support system 202 verifies in step 611 the comprised hash value and compares it with the hash value of the corresponding real data stored in other MNO systems, and only proceeds in case of identical values. The support system is further configured to provide compatibility and/or in interaction with other MNO systems. To this end the support service post processes the dataset accordingly 611 by providing data transformation, signature verification, and/or consistency check services. Furthermore in 611 the support service may filter preferred neighboring cells based on movement directions of the UE and/or roaming agreements.

Subsequently the support system 202 provides 612 the transfer-related data from the dataset to the MNO device and/or service 402. Preferably the transfer-related data comprises cell, identification and/or frequency information of the neighboring cell. Upon reception of the transfer-related data 702 the 3GPP inter-MNO service transfer phases are continued 700 between the first MNO and the second MNO.

In preferred embodiments the transfer-related data does not have to be fetched on-demand, but can be prefetched e.g. due to cell movement patterns and/or predictions, i.e. cars on highways or trains on tracks having a predefined path. Also it may be cached and/or the smart contract automatically triggers updates of a cache, i.e. a temporary memory, in the support system upon an updated dataset.

The invention as detailed above provides a standardized system for all MNOs, which is independent of a specific 3GPP Release. The embodiments of the invention are compatible and complementary to ANR, handover, roaming and security specifications of 2G, 3G, 4G, and 5G. Therefore the solution of the present invention can be used independently of the used specification.

In an embodiment of the invention, performing a seamless inter-MNO handover, i.e. a cross-border and/or a cross-technology handover, are enabled. Furthermore, the present invention allows for real-time control and billing between different MNOs.

In embodiments of the invention, a virtual currency is used to provide billing services between the MNOs and/or UEs, which are in practice linked to a respective MNO customer tariff.

In an embodiment of the invention, the DL is interfaced and/or a part of a GSMA RAEX IR.21 database or a GSMA tool such as RAEX databases. Furthermore, roaming and/or International Telecommunication Union, ITU, systems may be based on the invention or parts of the invention.

In embodiments of the invention, the network related data from the DL is used for RAN sharing approaches where several MNOs use the same network equipment, thus being available for all UEs independent of their (the user of the UE) MNO-specific customer contract.

In an embodiment of the invention, the distributed ledger and/or smart contract enable the integration into and combination with fraud prevention mechanisms such as the Secure Telephone Identity Revisited, STIR, `Signature-based Handling of Asserted information using toKENs', SHAKEN, or 'Social Linked Data', SOLID, approaches.

What has been described and illustrated herein are embodiments of the invention along with some of variations. The terms, descriptions and figures used herein are set forth by way of illustration only and are not meant as limitations. Those skilled in the art will recognize that many variations are possible within the scope of the invention, as long as they fall within the terms of the appended claims, in which all terms are meant in their broadest reasonable sense unless otherwise indicated.

### Abbreviations

- MNO: Mobile Network Operator
- DL: Distributed Ledger
- DLT: Distributed Ledger Technology
- DAG: Directed Acyclic Graph
- RNC: Radio Network Controller
- ANR: Automatic Neighbor Relation
- UE: User Equipment
- eNB: evolved Node B
- NRT: Neighbor Relation Table
- NCL: Neighbor Cell List
- CN: Core Network
- OSS: Operations Support System
- BSS: Business Support System.
- O&M: Operations & Maintenance
- PCI: Physical Cell Identity
- CGI: Cell Global Identification
- CI: Cell Identity/Identification
- CID: Cell Identity/Identification
- NCGI: NR Cell Global Identity
- NR: New Radio
- NCGI: NR Cell Global Identity/Identification
- NCI: NR Cell Identity/Identification
- SAC: Service Area Code
- SAI: Service Area Identification
- LAI: Location Area Identification
- RAI: Routing Area Identification
- RSZI: Regional Subscription Zone Identity
- (I)SPC: (International) Signaling Point Codes
- PLMN (ID): Public Land Mobile Network (Identifier)
- EPLMN: Equivalent PLMN
- RSRP: Reference signal received power
- RSRQ: Reference signal received quality
- MSRN: Mobile Station Roaming Number
- TMGI: Temporary Mobile Group Identity
- MBMS: Multimedia Broadcast Multicast Service
- FQDN: Fully Qualified Domain Name
- N3IWF: Non-3GPP Inter-Working Function
- NRF: Network Function Repository Function
- NAI: Network Access Identifier
- APN: Access Point Name
- NAPTR: Naming Authority Pointer
- LSA (ID): Localized Service Area (Identity)
- SNA (ID): Shared Network Area (Identifier)
- ANDSF-SN: Access Network Discovery and Selection Function - Server Name
- TCI: Transceiver Control Interface
- MCC: Mobile Country Code
- MNC: Mobile Network Code
- LAC: Location Area Code
- RAC: Routing Area Code
- RNC ID: Radio Network Controller Identifier
- UARFCN: UTRA Absolute Radio Frequency Channel Number
- EARFCN: E-UTRA Absolute Radio Frequency Channel Number
- Route Area PLMN: Route Area Public Land Mobile Network
- NCC: Network (PLMN) Color Code
- BCC: Base Transceiver Station (BTS) Color Code
- BCCH: broadcast control channel
- ARFCN: Absolute Radio Frequency Channel Number
- FCCH: Frequency Correction Channel
- SCH: Synchronization Channel
- PBCCH: Packet Broadcast Control Channel
- PCH: Paging channel
- RACH: Random access channel
- AGCH: Access grant channel
- PKI: Public Key Infrastructure
- IPFS: Inter Planetary File System
- GSMA: Global System for Mobile Communications Association
- RAEX: Roaming Agreement Exchange
- 3GPP: 3rd Generation Partnership Project

## Claims

1. A method for management of a handover of network service for a user equipment, UE, (806) from a first mobile telecommunication network cell (809) operated by a first mobile network operator, MN01, to a second mobile telecommunication network cell (810) operated by a second mobile network operator, MNO2;
wherein the first cell (809) is operated by a first base station (804) connected to first MN01 infrastructure (802);
wherein the second cell (810) is operated by a first base station (805) connected to second MNO2 infrastructure (803);
wherein the UE (806) moves from the first to the second network cell,
the method comprising:
a) a step of at the first MNO1 infrastructure (802) storing transfer-related data of the first network cell (809) in a distributed ledger, DL (801), and at the second MNO 2 infrastructure (803) storing transfer-related data of the second network cell (810) in DL (801); and
b) a step of at the first MNO1 infrastructure (802) retrieving said transfer-related data of the second network cell (810) from the DL (801),
providing said transfer-related data to the UE (806), wherein the UE (806) is connected to the first network cell (809) and/or
providing said transfer-related data to hardware of the first network cell (809) that communicates with the UE (806);
wherein the second network cell is neighboring and/or overlapping the first network cell;
wherein the first MNO1 infrastructure (802) and the second MNO2 infrastructure (803) of both MNOs are connected, via respective connections (901) and (902), to the DL (801), which is shared between the first MN01 infrastructure (802) and the second MNO2 infrastructure (803);
wherein the transfer-related data of the first and the second network cell comprise a frequency and an identifier, of the neighboring cells of the first and the second network cell;
wherein the DL (801) comprises a support service 202 and database service 204; and
wherein the support service (202) is a local service at a respective MNO infrastructure and is configured to interact with the database service (204) via smart contracts (203,205).

2. The method according to claim 1, further comprising
c) a step of the support service (202) at least one MNO infrastructure (802, 803) updating the transfer-related data for at least one network cell operated by the MNO in database service (204) of the DL (801) via a smart contract (203).

3. The method according to claim 1 or 2, wherein the transfer-related data further comprises at least one of data regarding systems, procedures, interfaces, protocols and functionality as defined in a mobile network standard of the first and/or second network cell.

4. The method according to any one of claims 1 to 3,
wherein the transfer-related data relates to data, procedures, regulations, interfaces, and functionality as defined in the Harmonized Calculation Method, HCM, and/or
wherein the transfer-related data is used in one or more of
a) in tools which implement the HCM agreement,
b) in tools which implement roaming agreements,
c) in the Roaming Agreement Exchange, RAEX, tools provided by the GSMA.

5. The method according to any one of claims 2 to 4, wherein any one of the storing step, the retrieving step, and the updating step is performed using the least one smart contract (203) of the DL (801).

6. The method according to any one of claims 2 to 5, wherein the transfer-related data is hashed and only the hash values are stored in the database service (204) of the DL (801), or wherein the transfer-related data is partly hashed and the hash values and parts of the transfer-related data are stored in the database service (204) of the DL (801).

7. The method according to any one of claims 1 to 6, further comprising
d) a step of data verification in the distributed ledger for regulatory control, via a smart contract of the DL;
wherein the data verification is performed according to at least one of:
i) a national legal framework for telecommunications;
ii) an international legal framework for telecommunications;
iii) a spectrum management organization;
iv) a HCM agreement;
v) the recommendations, specifications, and/or indication of the GSMA;
vi) the National Table of Frequency Allocation, NTFA; and/or
vii) security systems such as lawful intercept and/or surveillance systems.

8. The method according to any one of claims 1 to 7, further comprising a step of the MNO 1 notifying the MNO2 about the handover.

9. The method according to any one of claims 1 to 8, wherein the handover is performed according to one of:
i) a "network handover" according to 3GPP specification,
ii) a "network reselection" according to 3GPP specification,
iii) a "blind handover" according to 3GPP specification, and/or
iv) a "release with redirection" according to 3GPP specification.

10. The method according to any one of claims 1 to 9, wherein the DL (801) is configured to handle the roaming and/or billing processes between the MNO 1 and the MNO2 for the UE handover, preferably using a virtual currency native to the DL (801), a general virtual currency, and/or a fiat currency.

11. The method according to any one of claims 1 to 10, wherein the handover of service relates to a service along a chain of cells or base-stations and wherein the transfer-related data comprises all transfer-related data for each of a plurality of single handovers of service along said chain, and
wherein said chain corresponds to transportation infrastructure preferably to one of: highways, cross-country roads, railways, flight corridors.

12. The method according to any one of claims 1 to 11, wherein the at least one smart contract (203, 205) of the DL (801) is configured to handle at least one of: MNO agreements, roaming contracts, contracts in relation to the HCM agreement, RAEX tools, tariffs, user data, and UE data.

13. A system comprising at least one first network node operated at a first mobile network operator, MN01, and at least one second network node operated at a second mobile network operator, MNO2, wherein the first and second network nodes are configured for management of a handover of service for a LTE (806) from a first to a second mobile telecommunication network cell according to the method of any one of claims 1 to 12.

14. A computer program comprising instructions which, when the program is executed by a first computer and a second computer, cause the first computer to operate as a first network node according to claim 13 and cause the second computer to operate as a second network node according to claim 13 and to cause the first and second computer to perform the method of any one of claims 1 to 12.

## Patentansprüche

1. Verfahren zur Verwaltung einer Übergabe eines Netzdienstes für ein Benutzergerät, UE, (806) von einer ersten Mobiltelekommunikations-Netzwerkzelle (809), die von einem ersten Mobilnetzbetreiber, MNO1, betrieben wird, zu einer zweiten Mobiltelekommunikations-Netzwerkzelle (810), die von einem zweiten Mobilnetzbetreiber, MNO2, betrieben wird;
wobei die erste Zelle (809) von einer ersten Basisstation (804) betrieben wird, die mit einer ersten MN01-Infrastruktur (802) verbunden ist;
wobei die zweite Zelle (810) von einer ersten Basisstation (805) betrieben wird, die mit einer zweiten MN02-Infrastruktur (803) verbunden ist;
wobei sich das UE (806) von der ersten zu der zweiten Netzwerkzelle bewegt, wobei das Verfahren aufweist
a) einen Schritt des Speicherns transferbezogener Daten der ersten Netzwerkzelle (809) an der der ersten MN01-Infrastruktur (802) in einem Distributed Ledger, DL (801), und des Speicherns transferbezogener Daten der zweiten Netzwerkzelle (810) an der zweiten MN02-Infrastruktur (803) in dem DL (801); und
b) einen Schritt des Abrufens der transferbezogenen Daten der zweiten Netzwerkzelle (810) an der der ersten MN01-Infrastruktur (802) aus dem DL (801), Bereitstellen der transferbezogenen Daten an das UE (806), wobei das UE (806) mit der ersten Netzwerkzelle (809) verbunden ist, und/oder
Bereitstellen der transferbezogenen Daten an die Hardware der ersten Netzwerkzelle (809), die mit dem UE (806) kommuniziert;
wobei die zweite Netzwerkzelle der ersten Netzwerkzelle benachbart ist und/oder sich mit dieser überlappt;
wobei die erste MN01-Infrastruktur (802) und die zweite MN02-Infrastruktur (803) beider MNOs über jeweilige Verbindungen (901) und (902) mit dem DL (801) verbunden sind, welcher zwischen der ersten MN01-Infrastruktur (802) und der zweiten MNO2-Infrastruktur (803) geteilt wird;
wobei die transferbezogenen Daten der ersten und der zweiten Netzwerkzelle eine Frequenz und eine Kennung der benachbarten Zellen der ersten und der zweiten Netzwerkzelle aufweisen;
wobei der DL (801) einen Unterstützungsdienst (202) und einen Datenbankdienst (204) aufweist; und wobei der Unterstützungsdienst (202) ein lokaler Dienst bei einer jeweiligen MNO-Infrastruktur ist und konfiguriert ist, mit dem Datenbankdienst (204) über Smart Contracts (203, 205) zu interagieren.

2. Verfahren nach Anspruch 1, das ferner aufweist:
c) einen Schritt des Aktualisierens durch den Unterstützungsdienst (202) mindestens einer MNO-Infrastruktur (802, 803) der transferbezogenen Daten für mindestens eine vom MNO betriebene Netzwerkzelle im Datenbankdienst (204) des DL (801) über einen Smart Contract (203).

3. Verfahren nach Anspruch 1 oder 2, wobei die transferbezogenen Daten ferner mindestens eines der Daten aufweisen, die sich auf Systeme, Verfahren, Schnittstellen, Protokolle und Funktionen beziehen, wie sie in einem Mobilfunkstandard der ersten und/oder zweiten Netzwerkzelle definiert sind.

4. Verfahren nach einem der Ansprüche 1 bis 3,
wobei sich die transferbezogenen Daten auf Daten, Verfahren, Vorschriften, Schnittstellen und Funktionen beziehen, wie sie in der Harmonized Calculation Method (HCM) definiert sind, und/oder
wobei die transferbezogenen Daten in einem oder mehreren des Folgenden verwendet werden
a) in Werkzeugen, die die HCM-Vereinbarung umsetzen
b) in Werkzeugen, die Roaming-Vereinbarungen implementieren,
c) in den von der GSMA bereitgestellten Roaming Agreement Exchange, RAEX, Werkzeugen.

5. Verfahren nach einem der Ansprüche 2 bis 4, wobei der Schritt des Speicherns, der Schritt des Abrufens oder der Schritt des Aktualisierens unter Verwendung des mindestens einen Smart Contract (203) des DL (801) durchgeführt wird.

6. Verfahren nach einem der Ansprüche 2 bis 5, wobei die transferbezogenen Daten gehasht werden und nur die Hash-Werte im Datenbankdienst (204) des DL (801) gespeichert werden, oder wobei die transferbezogenen Daten teilweise gehasht werden und die Hash-Werte und Teile der transferbezogenen Daten im Datenbankdienst (204) des DL (801) gespeichert werden.

7. Verfahren nach einem der Ansprüche 1 bis 6, das ferner aufweist:
d) einen Schritt der Datenverifikation im distributed Ledger zur regulatorischen Kontrolle über einen Smart Contract des DL;
wobei die Datenverifikation gemäß mindestens einem des Folgenden durchgeführt wird:
i) einem nationalen Rechtsrahmen für die Telekommunikation;
ii) einem internationalen Rechtsrahmen für die Telekommunikation;
iii) einer Frequenzverwaltungsorganisation
iv) einer HCM-Vereinbarung;
v) den Empfehlungen, Spezifikationen und/oder Angaben der GSMA;
vi) der National Table of Frequency Allocation, NTFA; und/oder
vii Sicherheitssysteme wie rechtmäßige Abhör- und/oder Überwachungssysteme.

8. Verfahren nach einem der Ansprüche 1 bis 7, das ferner einen Schritt des Benachrichtigens des MNO2 durch den MNO1 über die Übergabe.

9. Verfahren nach einem der Ansprüche 1 bis 8, wobei die Übergabe nach einem des Folgenden durchgeführt wird
i) einer "Netzwerkübergabe" gemäß der 3GPP-Spezifikation,
ii) einer "Netzwerkneuwahl" gemäß der 3GPP-Spezifikation,
iii) einem "blinden Übergabe" gemäß der 3GPP-Spezifikation, und/oder
iv) eine "Freigabe mit Umleitung" nach der 3GPP-Spezifikation.

10. Verfahren nach einem der Ansprüche 1 bis 9, wobei der DL (801) konfiguriert ist, die Roaming- und/oder Abrechnungsprozesse zwischen dem MNO1 und dem MNO2 für die UE-Übergabe abzuwickeln, vorzugsweise unter Verwendung einer dem DL (801) eigenen virtuellen Währung, einer allgemeinen virtuellen Währung und/oder einer Fiat-Währung.

11. Verfahren nach einem der Ansprüche 1 bis 10, wobei sich die Dienstübergabe auf einen Dienst entlang einer Kette von Zellen oder Basisstationen bezieht und wobei die transferbezogenen Daten alle transferbezogenen Daten für jede von mehreren einzelnen Dienstübergaben entlang der Kette aufweisen, und
wobei die Kette einer Transportinfrastruktur entspricht, vorzugsweise einer von Autobahnen, Überlandstraßen, Eisenbahnen und Flugkorridoren.

12. Verfahren nach einem der Ansprüche 1 bis 11, wobei der mindestens eine Smart Contract (203, 205) des DL (801) konfiguriert ist, mindestens eines des Folgenden handzuhaben: MNO-Vereinbarungen, Roaming-Verträge, Verträge in Bezug auf die HCM-Vereinbarung, RAEX-Werkzeuge, Tarife, Benutzerdaten und UE-Daten.

13. System, das mindestens einen ersten Netzwerkknoten, der bei einem ersten Mobilfunknetzbetreiber, MNO1, betrieben wird, und mindestens einen zweiten Netzwerkknoten aufweist, der bei einem zweiten Mobilfunknetzbetreiber, MNO2, betrieben wird, wobei der erste und der zweite Netzwerkknoten für die Verwaltung einer Dienstübergabe für ein UE (806) von einer ersten zu einer zweiten Mobilfunknetzwerkzelle gemäß dem Verfahren nach einem der Ansprüche 1 bis 12 konfiguriert sind.

14. Computerprogramm, das Anweisungen aufweist, die, wenn das Programm von einem ersten Computer und einem zweiten Computer ausgeführt wird, den ersten Computer veranlassen, als ein erster Netzwerkknoten gemäß Anspruch 13 zu arbeiten, und den zweiten Computer veranlassen, als ein zweiter Netzwerkknoten gemäß Anspruch 13 zu arbeiten, und den ersten und zweiten Computer veranlassen, das Verfahren nach einem der Ansprüche 1 bis 12 auszuführen.

## Revendications

1. Procédé de gestion d'un transfert de service réseau pour un équipement utilisateur, UE, (806) d'une première cellule de réseau de télécommunication mobile (809) exploitée par un premier opérateur de réseau mobile, MNO1, à une deuxième cellule de réseau de télécommunication mobile (810) exploitée par un deuxième opérateur de réseau mobile, MNO2 ;
où la première cellule (809) est exploitée par une première station de base (804) connectée à une infrastructure de premier MNO 1 (802) ;
où la deuxième cellule (810) est exploitée par une première station de base (805) connectée à une infrastructure de deuxième MNO2 (803) ;
où l'UE (806) se déplace de la première vers la deuxième cellule de réseau, ledit procédé comprenant :
a) une étape de stockage, au niveau de l'infrastructure de premier MNO1 (802), de données relatives au transfert de la première cellule de réseau (809) dans un registre distribué, DL (801), et de stockage, au niveau de l'infrastructure de deuxième MNO2 (803), de données relatives au transfert de la deuxième cellule de réseau (810) dans un DL (801) ; et
b) une étape d'extraction, au niveau de l'infrastructure de premier MNO1 (802), des données relatives au transfert de la deuxième cellule de réseau (810) à partir du DL (801),
de délivrance des données relatives au transfert à l'UE (806), l'UE (806) étant connecté à la première cellule de réseau (809) et/ou
de délivrance des données relatives au transfert à un matériel de la première cellule de réseau (809) communiquant avec l'UE (806) ;
où la deuxième cellule de réseau est voisine de la première cellule de réseau et/ou chevauche celle-ci ;
où l'infrastructure de premier MNO1 (802) et l'infrastructure de deuxième MNO2 (803) des deux MNO sont connectées par l'intermédiaire de connexions respectives (901) et (902) au DL (801) partagé entre l'infrastructure de premier MNO1 (802) et l'infrastructure de deuxième MNO2 (803) ;
où les données relatives au transfert de la première et de la deuxième cellule de réseau comprennent une fréquence et un identifiant des cellules voisines de la première et de la deuxième cellule de réseau ;
où le DL (801) comprend un service d'assistance (202) et un service de base de données (204) ; et où le service d'assistance (202) est un service local au niveau d'une infrastructure MNO respective, et est configuré pour interagir avec le service de base de données (204) par l'intermédiaire de contrats intelligents (203,205).

2. Procédé selon la revendication 1, comprenant en outre
c) une étape de mise à jour des données relatives au transfert par le service d'assistance (202) d'au moins une infrastructure MNO (802, 803), pour au moins une cellule de réseau exploitée par le MNO dans le service de base de données (204) du DL (801) par l'intermédiaire d'un contrat intelligent (203).

3. Procédé selon la revendication 1 ou la revendication 2, où les données relatives au transfert comprennent en outre des données relatives à des systèmes et/ou à des procédures et/ou à des interfaces et/ou à des protocoles et/ou à une fonctionnalité, comme défini dans une norme de réseau mobile de la première et/ou de la deuxième cellule de réseau.

4. Procédé selon l'une des revendications 1 à 3,
où les données relatives au transfert concernent des données, procédures, règlements, interfaces et une fonctionnalité, comme défini dans la méthode de calcul harmonisée, HCM, et/ou
où les données relatives au transfert sont utilisées dans
a) des outils implémentant l'accord HCM, et/ou
b) des outils implémentant des accords d'itinérance, et/ou
c) dans les outils d'accord en matière d'itinérance, RAEX, fournis par le GSMA.

5. Procédé selon l'une des revendications 2 à 4, où l'une quelconque de l'étape de stockage, de l'étape d'extraction, et de l'étape de mise à jour est exécutée au moyen dudit au moins un contrat intelligent (203) du DL (801).

6. Procédé selon l'une des revendications 2 à 5, où les données relatives au transfert sont hachées et seules les valeurs de hachage sont stockées dans le service de base de données (204) du DL (801), ou où les données relatives au transfert sont partiellement hachées et les valeurs de hachage et les parties des données relatives au transfert sont stockées dans le service de base de données (204) du DL (801).

7. Procédé selon l'une des revendications 1 à 6, comprenant en outre
d) une étape de vérification de données dans le registre distribué pour un contrôle réglementaire, par l'intermédiaire d'un contrat intelligent du DL ;
où la vérification de données est effectuée conformément à :
i) un cadre juridique national pour les télécommunications ; et/ou
ii) un cadre juridique international pour les télécommunications ; et/ou
iii) une organisation de gestion du spectre ; et/ou
iv) un accord HCM ; et/ou
v) les recommandations, spécifications, et/ou l'indication du GSMA ; et/ou
vi) le tableau national d'attribution des fréquences, NTFA ; et/ou
vii) des systèmes de sécurité tels qu'un interception licite et/ou des systèmes de surveillance.

8. Procédé selon l'une des revendications 1 à 7, comprenant en outre une étape de notification du MNO2 par le MNO 1 relativement au transfert.

9. Procédé selon l'une des revendications 1 à 8, où le transfert est effectué conformément à
i) un "transfert de réseau" suivant la spécification 3GPP, ou
ii) une "resélection de réseau" suivant la spécification 3GPP, ou
iii) un "transfert en aveugle" suivant la spécification 3GPP, et/ou
iv) à une "libération avec redirection" suivant la spécification 3GPP.

10. Procédé selon l'une des revendications 1 à 9, où le DL (801) est configuré pour traiter les processus d'itinérance et/ou de facturation entre le MNO1 et le MNO2 pour le transfert d'UE, préférentiellement au moyen d'une monnaie virtuelle native vers le DL (801), d'une monnaie virtuelle générale, et/ou d'une monnaie fiduciaire.

11. Procédé selon l'une des revendications 1 à 10, où le transfert de service concerne un service le long d'une chaîne de cellules ou de stations de base et où les données relatives au transfert comprennent toutes les données relatives au transfert pour chaque transfert d'une pluralité de transferts de service uniques le long de la chaîne, et
où la chaîne correspond à une infrastructure de transport préférentiellement vers : des autoroutes, ou des voies de communication, ou des voies ferrées, ou des couloirs aériens.

12. Procédé selon l'une des revendications 1 à 11, où ledit au moins un contrat intelligent (203, 205) du DL (801) est configuré pour traiter des accords MNO et/ou des contrats d'itinérance et/ou des contrats en relation avec l'accord HCM, et/ou des outils RAEX, et/ou des tarifs, et/ou des données d'utilisateur, et/ou des données d'UE.

13. Système comprenant au moins un premier noeud de réseau exploité au niveau d'un premier opérateur de réseau mobile, MNO1, et au moins un deuxième noeud de réseau exploité au niveau d'un deuxième opérateur de réseau mobile, MNO2, où le premier et le deuxième noeuds de réseau sont configurés pour la gestion d'un transfert de service pour un UE (806) d'une première vers une deuxième cellule de réseau de télécommunication mobile conformément au procédé selon l'une des revendications 1 à 12.

14. Programme informatique, comprenant des instructions qui, lorsque le programme est exécuté par un premier ordinateur et un deuxième ordinateur, provoquent le fonctionnement du premier ordinateur comme premier noeud de réseau selon la revendication 13 et le fonctionnement du deuxième ordinateur comme deuxième noeud de réseau selon la revendication 13, et l'exécution par le premier et le deuxième ordinateur du procédé selon l'une des revendications 1 à 12.
